# EUROPEAN PATENT APPLICATION

(11) **EP 4 821 707 A1**
(43) Date of publication of application: **14.10.2026**
(21) Application number: 26163924.9
(22) Date of filing: 11.03.2026
(51) Int. Cl.: B60C 19/00

(54) **PNEUMATIC TIRE**

(30) Priority: 10.04.2025 JP 2025065232
(71) Applicant: Sumitomo Rubber Industries, Ltd., Kobe-shi, Hyogo 651-0072 (JP)
(72) Inventor: SATO, TAKUYA, Kobe-shi, Hyogo, 651-0072 (JP); MATSUNAMI, SHO, Kobe-shi, Hyogo, 651-0072 (JP); YUKAWA, NAOKI, Kobe-shi, Hyogo, 651-0072 (JP)
(74) Representative: Manitz Finsterwald Patent- und Rechtsanwaltspartnerschaft mbB

(57) **Abstract**

A pneumatic tire (1) includes a tread portion (2) extending annularly, at least one noise damper (5) provided on an inner peripheral surface (2a) of the tread portion (2) on a tire inner cavity (1a) side, and a tire inner cavity center diameter (D) that is a sum (RD+DH) of a tire section height (DH) and a rim diameter (RD) of a rim (R) on which the pneumatic tire (1) is configured to be mounted. The noise damper (5) has a maximum thickness (T), in millimeters, in a tire radial direction and a hardness (H) (N/314 cm²). A first index (D×H/T) is in a range from 620 to 1850, and the first index (D×H/T) is obtained by dividing a product (D×H) of the tire inner cavity center diameter (D) and the hardness (H) by the maximum thickness (T).

## Description

### FIELD OF THE INVENTION

The present invention relates to a pneumatic tire having a noise damper on an inner peripheral surface of a tread portion.

### BACKGROUND OF THE INVENITON

Conventionally, a pneumatic tire having a noise damper on an inner peripheral surface (tire inner cavity surface) of a tread portion has been known.
For example, Patent Document 1 below proposes a pneumatic tire in which damage to a noise damper is suppressed while improving noise damping performance by specifying a core density, an overall density, and a height of the noise damper.

### Prior Art Document

### [Patent Document]

[Patent Document 1] Japanese Unexamined Patent Application Publication No. 2020-019390

### SUMMARY OF THE INVENTION

It is known that noise performance of a noise damper for a pneumatic tire improves as a cross-sectional area thereof increases, however, a noise damper with a large cross-sectional area may affect other performances, such as increased cost, increased weight, and heat accumulation effects.

The present invention was made in view of the above, and a primary object thereof is to provide a pneumatic tire capable of improving the noise performance without affecting other performances.

The present invention is a pneumatic tire (1) including:
a tread portion (2) extending annularly;
at least one noise damper (5) provided on an inner peripheral surface (2a) of the tread portion (2) on a tire inner cavity (1a) side; and
a tire inner cavity center diameter (D) that is a sum (RD+DH) of a tire section height (DH) and a rim diameter (RD) of a rim (R) on which the pneumatic tire (1) is configured to be mounted,
wherein the noise damper (5) has a maximum thickness (T), in millimeters, in a tire radial direction and a hardness (H) (N/314 cm²) measured according to Method A specified in Japanese Industrial Standards JIS K6400-2,
characterized in that
a first index (D×H/T) is in a range from 620 to 1850, and
the first index (D×H/T) is obtained by dividing a product (D×H) of the tire inner cavity center diameter (D) and the hardness (H) of the noise damper (5) by the maximum thickness (T) of the noise damper (5).

By having the above-described configuration, it is possible that the pneumatic tire of the present invention improves the noise performance without affecting other performances.

### BRIEF DESCRIPTION OF THE DRAWINGS

FIG. 1 is a cross-sectional view of a pneumatic tire according to an embodiment of the present invention.
FIG. 2 is a cross-sectional view schematically showing the movement of the noise damper in a tire axial direction in a sound-absorbing state.
FIG. 3 is a cross-sectional view schematically showing the movement of the noise damper in a tire circumferential direction in the sound-absorbing state.

### DETAILED DESCRIPTION OF THE INVENTION

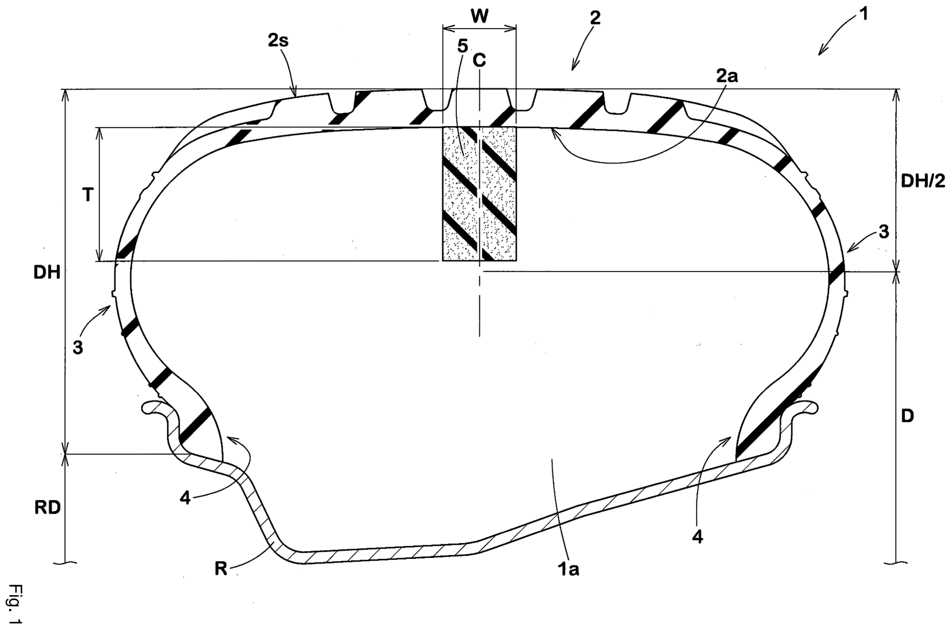

An embodiment of the present invention will now be described in conjunction with accompanying drawings. FIG. 1 is a tire meridian section passing through a rotation axis, showing a pneumatic tire 1 in a standard state according to the present embodiment. In the present specification, the "standard state" refers to a state in which the pneumatic tire 1 is mounted on a standard rim (R), inflated to a standard inner pressure, and loaded with no tire load. Hereinafter, dimensions and the like of various parts of the pneumatic tire 1 are values measured under the standard state unless otherwise noted.

The "standard rim (R)" refers to a wheel rim specified for the pneumatic tire 1 by a standard included in a standardization system on which the tire 1 is based, for example, the "normal wheel rim" in JATMA, "Design Rim" in TRA, and "Measuring Rim" in ETRTO in the case of the tire 1 for which various standards have been established. In the case of the tire 1 for which various standards have not been established, the "standard rim (R)" is a rim having the smallest rim diameter RD and the smallest rim width among rims on which the pneumatic tire 1 can be mounted and does not cause air leakage.

The "standard inner pressure" refers to air pressure specified for the pneumatic tire 1 by a standard included in a standardization system on which the pneumatic tire 1 is based, for example, the maximum air pressure in JATMA, the maximum value listed in the "TIRE LOAD LIMITS AT VARIOUS COLD INFLATION PRESSURES" table in TRA, and "INFLATION PRESSURE" in ETRTO in the case of the pneumatic tire 1 for which various standards have been established. In the case of the pneumatic tire 1 for which various standards have not been established, the "standard inner pressure" is an air pressure defined for the pneumatic tire 1 by a manufacturer or the like.

As shown in FIG. 1, the pneumatic tire 1 is suitably used as a passenger car tire, for example. The pneumatic tire 1 is not limited to a passenger car tire and is applicable to various tires such as heavy-duty tires, motorcycle tires, and industrial vehicle tires.

The pneumatic tire 1 in the present embodiment includes a tread portion 2 extending annularly and a pair of sidewall portions 3 extending inward in a tire radial direction from both axial edges of the tread portion 2. The tread portion 2 is a portion forming a ground contact surface (2s), for example. The pneumatic tire 1 preferably includes a pair of bead portions 4 each located radially inward of the respective sidewall portion 3.

The pneumatic tire 1 includes at least one (one in the present embodiment) noise damper 5 provided on an inner peripheral surface (2a), which is a surface of the tread portion 2 on a tire inner cavity (1a) side. The noise damper 5 configured as such can improve the noise performance of the pneumatic tire 1 by absorbing cavity resonance sound generated in the tire inner cavity (1a).

The pneumatic tire 1 of the present embodiment has a tire inner cavity center diameter (D) in millimeters at a distance radially outward by half a tire section height DH (DH/2) from the rim diameter RD. Therefore, it is represented as tire inner cavity center diameter (D) = rim diameter RD + (tire section height DH/2 × 2). In other words, the tire inner cavity center diameter (D) is the sum (RD + DH) of the rim diameter RD and the tire section height DH.

The noise damper 5 in the present embodiment has a maximum thickness (T) in millimeters in the tire radial direction and a maximum width (W) in millimeters in the tire axial direction. Here, the maximum thickness (T) (mm) of the noise damper 5 is the thickness in the tire radial direction from the inner peripheral surface (2a) at the tire equator (C) to the radially innermost end of the noise damper 5. Further, the maximum width (W) (mm) of the noise damper 5 is the width in the tire axial direction from one end to the other end thereof in the tire axial direction in a state where the noise damper 5 is attached to the inner peripheral surface (2a).

The noise damper 5 has a predetermined hardness (H) (N/314 cm²). Here, the hardness (H) (N/314 cm²) of the noise damper 5 is a value measured according to Method A specified in Japanese Industrial Standards JIS K6400-2, by using a sample taken from the pneumatic tire 1.

In the pneumatic tire 1, the first index (D×H/T), obtained by dividing the product (D×H) of the tire inner cavity center diameter (D) in millimeters and the hardness (H) (N/314 cm²) of the noise damper 5 by the maximum thickness (T) in millimeters of the noise damper 5, is preferably in the range from 620 to 1850.

It is known that the frequency of the cavity resonance sound varies based on the tire inner cavity center diameter (D) (mm). By specifying the first index (D×H/T) including the tire inner cavity center diameter (D) (mm), the pneumatic tire 1 of the present embodiment can efficiently absorb the cavity resonance sound regardless of the tire size. The pneumatic tire 1 configured as such can absorb sound (noise) by using the noise damper 5 with a small cross-sectional area, and thus can suppress cost increases, weight increases, and heat accumulation effects caused by the noise damper 5. Therefore, it is possible that the pneumatic tire 1 of the present embodiment improves the noise performance without affecting other performances.

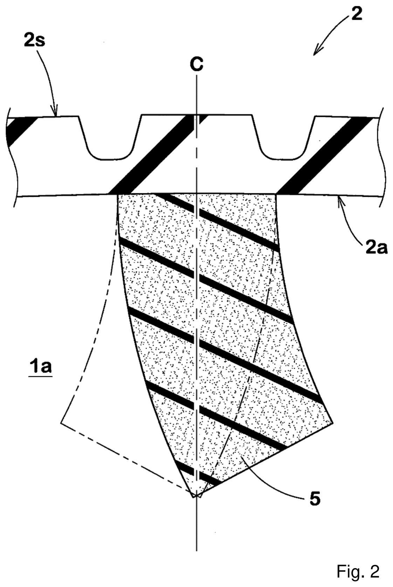

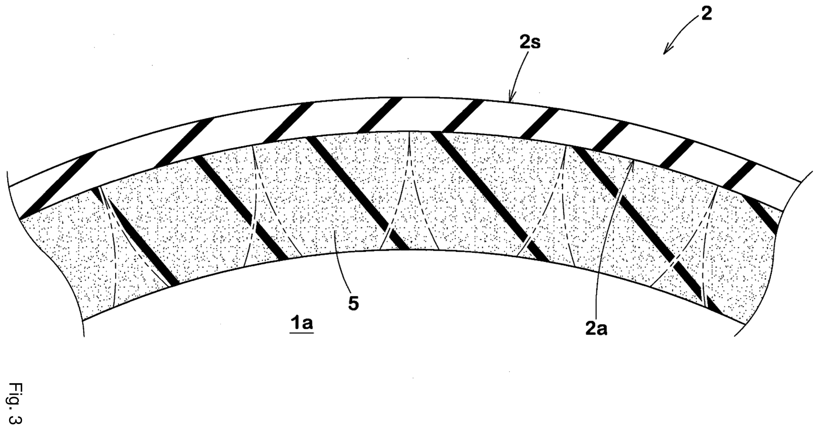

FIG. 2 is a cross-sectional view schematically showing the movement of the noise damper 5 in the tire axial direction in a sound-absorbing state, and FIG. 3 is a cross-sectional view schematically showing the movement of the noise damper 5 in the tire circumferential direction in the sound-absorbing state. In FIG. 2 and FIG. 3, the movement of the noise damper 5 is shown somewhat exaggerated. As shown in FIG. 2 and FIG. 3, since the first index (D×H/T) is set in the range from 620 to 1850, the noise damper 5 resonates with the cavity resonance sound and can vibrate with a large amplitude as shown by the two-dot chain line, thereby can efficiently absorb the cavity resonance sound.

From such a point of view, the first index (D×H/T) is more preferably in the range from 680 to 1670, and even more preferably in the range from 720 to 1520. It should be noted that the combination of the upper limit value and the lower limit value can be arbitrarily selected from these numerical ranges.

As shown in FIG. 1, the pneumatic tire 1 in the present embodiment can efficiently absorb the cavity resonance sound since the tire inner cavity center diameter (D) is in the range from 440 to 660 mm. Therefore, it is possible that the pneumatic tire 1 of the present embodiment improves the noise performance regardless of the tire size. If the tire inner cavity center diameter (D) of the pneumatic tire 1 is in the range from 500 to 645 mm, the pneumatic tire 1 can absorb the cavity resonance sound more efficiently, and if the tire inner cavity center diameter (D) is in the range from 550 to 625 mm, the pneumatic tire 1 can absorb the cavity resonance sound even more efficiently.

The noise damper 5 is fixed to the inner peripheral surface (2a) of the tread portion 2 via double-sided tape, an adhesive, a pressure-sensitive adhesive, a sealant material, or the like, for example. The noise damper 5 configured as such is easy to install and helps to suppress cost increases. It should be noted that the noise damper 5 may be arranged without being fixed to the inner peripheral surface (2a) of the tread portion 2, or may be formed by applying an unfoamed raw liquid, which is the raw material of the noise damper 5, to the inner peripheral surface (2a) of the tread portion 2 and then foaming it after application, for example.

The cross-sectional shape of the noise damper 5 of the present embodiment in the tire meridian section is rectangular. The noise damper 5 configured as such is easy to resonate with the cavity resonance sound of the pneumatic tire 1, and can improve the noise performance of the pneumatic tire 1. In addition, the noise damper 5 configured as such is easy to manufacture and can suppress cost increases. It should be noted that the cross-sectional shape of the noise damper 5 is not limited to such an embodiment and may be a trapezoidal shape or an inverted trapezoidal shape, for example.

The noise damper 5 of the present embodiment is provided continuously in the tire circumferential direction. The noise damper 5 configured as such can exert a sound-absorbing effect uniformly over the entire circumference of the pneumatic tire 1. It should be noted that the noise damper 5 is not limited to such an embodiment and may have a part discontinuous in the tire circumferential direction, or a plurality of the noise dampers 5 may be fixed to the inner peripheral surface (2a), for example.

The noise damper 5 is formed from urethane foam, for example. The urethane foam may be formed by a well-known manufacturing method, for example. The noise damper 5 configured as such can be selected from mass-produced products and helps to suppress cost increases.

The maximum thickness (T) of the noise damper 5 is preferably 4.0 times or less the maximum width (W) of the noise damper 5. Since the maximum thickness (T) of the noise damper 5 is 4.0 times or less the maximum width (W) of the noise damper 5, deformation during rolling can be suppressed, and thus durability performance of the noise damper 5 can be improved. From such a point of view, the maximum thickness (T) of the noise damper 5 is more preferably 3.0 times or less, even more preferably 2.0 times or less, and most preferably 1.0 time or less the maximum width (W) of the noise damper 5.

The maximum thickness (T) of the noise damper 5 is preferably 10 mm or more. Since the maximum thickness (T) of the noise damper 5 is 10 mm or more, the noise damper 5 can easily resonate with the cavity resonance sound, and the noise performance of the pneumatic tire 1 can be improved. From such a point of view, the maximum thickness (T) of the noise damper 5 is more preferably 20 mm or more, and even more preferably 30 mm or more.

The maximum thickness (T) of the noise damper 5 is preferably 80 mm or less. Since the maximum thickness (T) of the noise damper 5 is 80 mm or less, it is possible to suppress affecting other performances such as steering stability performance and workability of mounting onto the standard rim (R). From such a point of view, the maximum thickness (T) of the noise damper 5 is more preferably 70 mm or less, and even more preferably 60 mm or less.

From these described above, the maximum thickness (T) of the noise damper 5 is preferably in the range from 10 to 80 mm, more preferably in the range from 20 to 70 mm, and even more preferably in the range from 30 to 60 mm. It should be noted that the combination of the upper limit value and the lower limit value can be arbitrarily selected from these numerical ranges.

The cross-sectional area of the noise damper 5 in the tire meridian section is preferably 5% or more of the cross-sectional area of the tire inner cavity (1a) in the tire meridian section. Here, the cross-sectional area of the noise damper 5 is an area determined from the outer shape including the internal hollow cells. Further, the cross-sectional area of the tire inner cavity (1a) is the area of the space surrounded by the inner surface of the pneumatic tire 1 in the standard state and the outer surface of the standard rim (R).
Since the cross-sectional area of the noise damper 5 is 5% or more of the cross-sectional area of the tire inner cavity (1a), the sound-absorbing effect by the noise damper 5 can be reliably exhibited. From such a point of view, the cross-sectional area of the noise damper 5 is more preferably 7% or more of the cross-sectional area of the tire inner cavity (1a).

The cross-sectional area of the noise damper 5 is preferably 15% or less of the cross-sectional area of the tire inner cavity (1a). Since the cross-sectional area of the noise damper 5 is 15% or less of the cross-sectional area of the tire inner cavity (1a), cost increases, weight increases, and heat accumulation effects caused by the noise damper 5 can be suppressed. From such a point of view, the cross-sectional area of the noise damper 5 is more preferably 12% or less of the cross-sectional area of the tire inner cavity (1a).

From these described above, the cross-sectional area of the noise damper 5 is preferably in the range from 5% to 15%, and more preferably in the range from 7% to 12% of the cross-sectional area of the tire inner cavity (1a). It should be noted that the combination of the upper limit value and the lower limit value can be arbitrarily selected from these numerical ranges.

It is preferred that the number of cells of the noise damper 5 is 38 cells/25 mm or more. Here, the number of cells is a value measured according to Annex 1 of Japanese Industrial Standards JIS K6400-1. Since the number of cells of the noise damper 5 is 38 cells/25 mm or more, it is possible to suppress the cell size from becoming excessively large, prevent sound leakage, and improve the sound absorption performance. From such a point of view, it is more preferred that the number of cells of the noise damper 5 is 40 cells/25 mm or more.

It is preferred that the number of cells of the noise damper 5 is 50 cells/25 mm or less. Since the number of cells of the noise damper 5 is 50 cells/25 mm or less, it is possible to suppress the cell size from becoming excessively small, ensure a certain level of air permeability, and improve the sound absorption performance. From such a point of view, it is more preferred that the number of cells of the noise damper 5 is 48 cells/25 mm or less.

From these described above, the number of cells of the noise damper 5 is preferably in the range from 38 to 50 cells/25 mm, and more preferably in the range from 40 to 48 cells/25 mm. It should be noted that the combination of the upper limit value and the lower limit value can be arbitrarily selected from these numerical ranges.

While detailed description has been made of an especially preferred embodiment of the present invention, the present invention can be embodied in various forms without being limited to the illustrated embodiment.

### < Examples >

Pneumatic tires having the basic structure shown in FIG. 1 were made by way of test based on the specifications in Table 1. The noise performance of the pneumatic tires was tested by using the test pneumatic tires. The test method is as follows. It should be noted that the test tires share a common structure for structures not specifically specified.

### < Noise Performance >

Each of the test pneumatic tires was mounted on a drum testing machine and run on the drum that simulated a road surface at a speed of 60 km/h with a load of 4.2 kN, and then the peak of the cavity resonance sound was determined for each test tire. The test results are expressed as an index based on Reference 1 being 100, where a larger numerical value indicates superior noise performance.
The test results are shown in Table 1 and Table 2.

**Table 1**

| | Ref. 1 | Ref. 2 | Ref. 3 | Ref. 4 | Ref. 5 | Ref. 6 |
|---|---|---|---|---|---|---|
| Tire size | 235/55R19 | 275/45R21 | 235/40R19 | 245/45R19 | 275/35R20 | 235/55R19 |
| Tire inner cavity center diameter (D) [mm] | 612 | 657 | 577 | 593 | 604 | 612 |
| Hardness (H) of Noise | 85 | 86 | 109 | 109 | 101 | 50 |
| Damper [N/314 cm²] | | | | | | |
| Maximum thickness (T) of Noise damper [mm] | 25 | 30 | 30 | 20 | 20 | 55 |
| Maximum width (W) of Noise damper [mm] | 90 | 150 | 120 | 120 | 150 | 60 |
| First index (D×H/T) | 2081 | 1883 | 2096 | 3232 | 3050 | 556 |
| Maximum thickness (T) / Maximum width (W) | 0.3 | 0.2 | 0.3 | 0.2 | 0.1 | 0.9 |
| Noise performance [index] | 100 | 80 | 90 | 100 | 100 | 100 |

**Table 2**

| | Ex. 1 | Ex. 2 | Ex. 3 | Ex. 4 | Ex. 5 | Ex. 6 |
|---|---|---|---|---|---|---|
| Tire size | 235/55R19 | 235/55R19 | 235/55R19 | 235/55R19 | 235/55R19 | 195/60R17 |
| Tire inner cavity center diameter (D) [mm] | 612 | 612 | 612 | 612 | 612 | 549 |
| Hardness (H) of Noise Damper [N/314 cm²] | 85 | 85 | 85 | 85 | 70 | 70 |
| Maximum thickness (T) of Noise damper [mm] | 29 | 32 | 34 | 38 | 38 | 34 |
| Maximum width (W) of Noise damper [mm] | 80 | 70 | 65 | 60 | 60 | 65 |
| First index (D×H/T) | 1825 | 1626 | 1530 | 1369 | 1127 | 1130 |
| Maximum thickness (T) / Maximum width (W) | 0.4 | 0.5 | 0.5 | 0.6 | 0.6 | 0.5 |
| Noise performance [index] | 110 | 120 | 130 | 160 | 200 | 200 |

As a result of the test, it was confirmed that the pneumatic tires in the Examples had better noise performance than those in the References, and efficiently improved the noise performance with the noise damper having a small cross-sectional area.

### < Statement of Invention >

The present invention includes the following aspects.

### < Present Invention 1 >

A pneumatic tire (1) including:
a tread portion (2) extending annularly;
at least one noise damper (5) provided on an inner peripheral surface (2a) of the tread portion (2) on a tire inner cavity (1a) side; and
a tire inner cavity center diameter (D) that is a sum (RD+DH) of a tire section height (DH) and a rim diameter (RD) of a rim (R) on which the pneumatic tire (1) is configured to be mounted,
wherein the noise damper (5) has a maximum thickness (T), in millimeters, in a tire radial direction and a hardness (H) (N/314 cm²) measured according to Method A specified in Japanese Industrial Standards JIS K6400-2,
characterized in that
a first index (D×H/T) is in a range from 620 to 1850, and
the first index (D×H/T) is obtained by dividing a product (D×H) of the tire inner cavity center diameter (D) and the hardness (H) of the noise damper (5) by the maximum thickness (T) of the noise damper (5).

### < Present Invention 2 >

The pneumatic tire (1) according to Present Invention 1, wherein the first index (D×H/T) is in a range from 680 to 1670.

### < Present Invention 3 >

The pneumatic tire (1) according to Present Invention 1 or 2, wherein the first index (D×H/T) is in a range from 720 to 1520.

### < Present Invention 4 >

The pneumatic tire (1) according to any one of Present Inventions 1 to 3, wherein the tire inner cavity center diameter (D) is in a range from 440 to 660 mm.

### < Present Invention 5 >

The pneumatic tire (1) according to any one of Present Inventions 1 to 4, wherein the noise damper (5) has a rectangular cross-sectional shape in a tire meridian section.

### < Present Invention 6 >

The pneumatic tire (1) according to any one of Present Inventions 1 to 5, wherein the maximum thickness (T) of the noise damper (5) is in a range from 10 to 80 mm.

### < Present Invention 7 >

The pneumatic tire (1) according to any one of Present Inventions 1 to 6, wherein the maximum thickness (T) of the noise damper (5) is 4.0 times or less a maximum width (W) of the noise damper (5) in a tire axial direction.

### < Present Invention 8 >

The pneumatic tire (1) according to any one of Present Inventions 1 to 7, wherein the noise damper (5) has a cross-sectional area in a tire meridian section in a range from 5% to 15% of a cross-sectional area of a tire inner cavity (1a) in the tire meridian section.

### < Present Invention 9 >

The pneumatic tire (1) according to any one of Present Inventions 1 to 8, wherein the noise damper (5) has a number of cells in a range from 38 to 50 cells/25 mm.

### < Present Invention 10 >

The pneumatic tire (1) according to any one of Present Inventions 1 to 9, wherein the noise damper (5) is formed from urethane foam.

### < Present Invention 11 >

The pneumatic tire (1) according to any one of Present Inventions 1 to 10, wherein the tire inner cavity center diameter (D) is in a range from 500 to 645 mm.

### < Present Invention 12 >

The pneumatic tire (1) according to any one of Present Inventions 1 to 11, wherein the maximum thickness (T) of the noise damper (5) is 3.0 times or less a maximum width (W) of the noise damper (5) in a tire axial direction.

### < Present Invention 13 >

The pneumatic tire (1) according to any one of Present Inventions 1 to 12, wherein the maximum thickness (T) of the noise damper (5) is in a range from 20 to 70 mm.

### < Present Invention 14 >

The pneumatic tire (1) according to any one of Present Inventions 1 to 13, wherein the noise damper (5) has a cross-sectional area in a tire meridian section in a range from 7% to 12% of a cross-sectional area of a tire inner cavity (1a) in the tire meridian section.

### < Present Invention 15 >

The pneumatic tire (1) according to any one of Present Inventions 1 to 14, wherein the noise damper (5) has a number of cells in a range from 40 to 48 cells/25 mm.

### Description of Reference Signs

- 1: pneumatic tire
- 1a: tire inner cavity
- 2: tread portion
- 2a: inner peripheral surface
- 5: noise damper

## Claims

1. A pneumatic tire (1) comprising:
a tread portion (2) extending annularly;
at least one noise damper (5) provided on an inner peripheral surface (2a) of the tread portion (2) on a tire inner cavity (1a) side; and
a tire inner cavity center diameter (D) that is a sum (RD+DH) of a tire section height (DH) and a rim diameter (RD) of a rim (R) on which the pneumatic tire (1) is configured to be mounted,
wherein the noise damper (5) has a maximum thickness (T), in millimeters, in a tire radial direction and a hardness (H) (N/314 cm²) measured according to Method A specified in Japanese Industrial Standards JIS K6400-2,
**characterized in that**
a first index (D×H/T) is in a range from 620 to 1850, and
the first index (D×H/T) is obtained by dividing a product (D×H) of the tire inner cavity center diameter (D) and the hardness (H) of the noise damper (5) by the maximum thickness (T) of the noise damper (5).

2. The pneumatic tire (1) according to claim 1, wherein the first index (D×H/T) is in a range from 680 to 1670.

3. The pneumatic tire (1) according to claim 1 or 2, wherein the first index (D×H/T) is in a range from 720 to 1520.

4. The pneumatic tire (1) according to any one of claims 1 to 3, wherein the tire inner cavity center diameter (D) is in a range from 440 to 660 mm.

5. The pneumatic tire (1) according to any one of claims 1 to 4, wherein the noise damper (5) has a rectangular cross-sectional shape in a tire meridian section.

6. The pneumatic tire (1) according to any one of claims 1 to 5, wherein the maximum thickness (T) of the noise damper (5) is in a range from 10 to 80 mm.

7. The pneumatic tire (1) according to any one of claims 1 to 6, wherein the maximum thickness (T) of the noise damper (5) is 4.0 times or less a maximum width (W) of the noise damper (5) in a tire axial direction.

8. The pneumatic tire (1) according to any one of claims 1 to 7, wherein the noise damper (5) has a cross-sectional area in a tire meridian section in a range from 5% to 15% of a cross-sectional area of a tire inner cavity (1a) in the tire meridian section.

9. The pneumatic tire (1) according to any one of claims 1 to 8, wherein the noise damper (5) has a number of cells in a range from 38 to 50 cells/25 mm.

10. The pneumatic tire (1) according to any one of claims 1 to 9, wherein the noise damper (5) is formed from urethane foam.

11. The pneumatic tire (1) according to any one of claims 1 to 10, wherein the tire inner cavity center diameter (D) is in a range from 500 to 645 mm.

12. The pneumatic tire (1) according to any one of claims 1 to 11, wherein the maximum thickness (T) of the noise damper (5) is 3.0 times or less a maximum width (W) of the noise damper (5) in a tire axial direction.

13. The pneumatic tire (1) according to any one of claims 1 to 12, wherein the maximum thickness (T) of the noise damper (5) is in a range from 20 to 70 mm.

14. The pneumatic tire (1) according to any one of claims 1 to 13, wherein the noise damper (5) has a cross-sectional area in a tire meridian section in a range from 7% to 12% of a cross-sectional area of a tire inner cavity (1a) in the tire meridian section.

15. The pneumatic tire (1) according to any one of claims 1 to 14, wherein the noise damper (5) has a number of cells in a range from 40 to 48 cells/25 mm.
